Europäisches Patentamt

European Patent Office

Office européen des brevets

(19)

(11) Numéro de publication : **0 072 735**
**B1**

(12) ## FASCICULE DE BREVET EUROPÉEN

(45) Date de publication du fascicule du brevet :
24.04.85

(21) Numéro de dépôt : 82401470.8

(22) Date de dépôt : 04.08.82

(51) Int. Cl.⁴ : **C 08 F 18/08**

(54) **Latex de polymères d'acétate de vinyle et procédé de préparation.**

(30) Priorité : 10.08.81 FR 8115438

(43) Date de publication de la demande :
23.02.83 Bulletin 83/08

(45) Mention de la délivrance du brevet :
24.04.85 Bulletin 85/17

(84) Etats contractants désignés :
AT BE CH DE FR GB IT LI NL SE

(56) Documents cités :
DE-B- 1 180 133
FR-A- 1 479 750

(73) Titulaire : **RHONE-POULENC SPECIALITES CHIMI-
QUES**
**"Les Miroirs" 18, Avenue d'Alsace**
**F-92400 Courbevoie (FR)**

(72) Inventeur : **Schuppiser, Jean-Luc**
**12, Allée d'Appolon Gressy**
**F-77410 Claye-Souilly (FR)**
Inventeur : **Daniel, Jean-Claude**
**13, rue de Neuilly**
**F-94120 Fontenay-sous-Bois (FR)**

(74) Mandataire : Lepere, Michelle et al
**RHONE POULENC RECHERCHES Service Brevets
Chimie et Polymères 25, Quai Paul Doumer
F-92408 Courbevoie Cedex (FR)**

**Description**

L'invention a pour objet des latex de polymères de l'acétate de vinyle.

Les latex de polymères de l'acétate de vinyle, préparés par polymérisation en émulsion aqueuse de l'acétate de vinyle seul ou en mélange avec un monomère copolymérisable, sont généralement utilisés comme liants dans la fabrication des colles, peintures, textiles et papiers. De telles applications requièrent des latex stables au stockage et aux manipulations, possédant une certaine viscosité et donnant des films insensibles à l'eau ; propriétés que les latex de polymères de l'acétate de vinyle connus ne possèdent pas simultanément. C'est ainsi que les latex, obtenus par polymérisation sans colloïdes protecteurs, donnent des films de bonne tenue à l'eau, mais possèdent une viscosité trop faible ; la présence de fonctions carboxyliques dans le polymère permet d'améliorer la viscosité, qui reste cependant variable avec le pH du latex. Par ailleurs, les latex obtenus par polymérisation en présence de colloïdes protecteurs, tels que éthers de cellulose, alcools polyvinyliques, ou polyvinylpyrrolidone, possèdent, quel que soit leur pH, une viscosité satisfaisante, mais donnent des films très sensibles à l'eau ; en outre leur viscosité provoque en cours de préparation des difficultés d'agitation, d'échange thermique, de transfert et de filtration.

Les latex de polymères objet de l'invention ne présentent pas ces inconvénients, ils possèdent simultanément les propriétés nécessaires à leurs applications et sont de préparation facile.

Les latex de polymères de l'acétate de vinyle selon l'invention sont constitués de particules de diamètre moyen compris entre 0,05 et 1 μm de polymères ayant une température de transition vitreuse comprise entre − 20 et 50 °C, dont la concentration est comprise entre 10 et 70 % en poids et sont susceptibles d'être obtenus par polymérisation en émulsion aqueuse de l'acétate de vinyle seul ou en mélange avec un monomère copolymérisable, en présence d'un initiateur et d'un colloïde protecteur constitué a) d'un polymère de N-méthylolacrylamide ou de N-méthylolméthacrylamide soluble dans l'eau et b) d'un polymère d'éthylène glycol de masse moléculaire comprise entre 1 000 et 50 000 soluble dans l'eau.

Les latex de l'invention se caractérisent par le fait que pour une concentration donnée, leur viscosité faible à pH acide devient élevée à pH alcalin, puis reste invariable quel que soit le pH et en ce qu'ils donnent des films de polymères insensibles à l'eau.

Par polymères de l'acétate de vinyle, on entend les homopolymères ainsi que les copolymères de ce monomère avec au moins un autre monomère copolymérisable, choisi parmi les esters vinyliques d'acides monocarboxyliques saturés, ramifiés ou non, ayant de 1 à 12 atomes de carbone, comme le propionate, le « Versatate »® (marque déposée pour des esters d'acides ramifiés en $C_9$-$C_{11}$), le pivalate, le laurate de vinyle et/ou les esters d'acides insaturés mono- ou di-carboxyliques possédant 3 à 6 atomes de carbone et d'alcool possédant 1 à 10 atomes de carbone, comme les acrylates, méthacrylates, maléates, fumarates de méthyle, d'éthyle, de butyle, d'éthylhexyle.

Dans le latex, la concentration en particules de polymères est comprise entre 10 et 70 % et de préférence entre 35 à 65 % en poids. Les particules ont un diamètre moyen compris entre 0,05 et 1 μm et leur répartition granulométrique peut être large ou étroite, suivant les conditions de polymérisation mises en œuvre. Les polymères possèdent une température de transition vitreuse comprise entre − 20 et 50 °C et de préférence entre − 10 et 35 °C.

Dans le latex de polymère d'acétate de vinyle, le colloïde protecteur représente 0,1 à 5 % et de préférence 0,5 à 3 % en poids du polymère et est formé de 15 à 70 % en poids d'un polymère de N-méthylolacrylamide ou N-méthylolméthacrylamide a) et 30 à 85 % en poids du polymère d'éthylène glycol b).

Par polymère a) on entend : soit des homopolymères de N-méthylolacrylamide ou de N-méthylolméthacrylamide ; soit des copolymères de N-méthylolacrylamide et N-méthylolméthacrylamide en toutes proportions ; soit des copolymères de N-méthylolacrylamide et/ou N-méthylolméthacrylamide avec au moins un amide des acides acrylique et méthacrylique et de leurs dérivés N-alkylés, dont le groupe alkyle possède 1 à 4 atomes de carbone et peut être substitué par des groupes amine, ou alcoxy possédant 1 à 4 atomes de carbone ou dont le groupe alkyle possède 2 à 4 atomes de carbone et peut être substitué par un groupe hydroxy, tels que, par exemple, acrylamide, méthacrylamide, N-méthylacrylamide, N,N-diméthylacrylamide, N-isopropylacrylamide, N-méthylaminoisopropylacrylamide, N-méthoxyméthylacrylamide, N-isobutoxyméthylacrylamide, dans lesquels l'amide d'acides acrylique ou méthacrylique représente au plus 90 % en poids du copolymère ; soit encore des mélanges des homopolymères et copolymères ci-dessus.

Par polymère b) on entend : soit des homopolymères d'éthylène glycol ; soit des copolymères d'éthylène glycol et de propylène glycol et/ou de butylène glycol, dans lesquels la proportion d'éthylène glycol est d'au moins 70 % en poids ; soit des mélanges d'homopolymères ou de copolymères de masse moléculaire différente ; soit encore des mélanges d'homopolymères et de copolymères. Ces homo- et copolymères d'éthylène glycol possèdent une masse moléculaire comprise entre 1 000 et 50 000 et de préférence entre 3 000 et 35 000.

Les latex à pH acide après leur préparation possèdent une viscosité faible, ce qui facilite leur manipulation. Cette viscosité s'élève dès que le pH du latex devient alcalin, par exemple par addition d'une solution alcaline, pour atteindre un maximum, se stabiliser et rester invariable quel que soit le pH. La viscosité maximum est fonction de la nature du colloïde protecteur et de sa concentration dans le latex et le temps pour l'atteindre est fonction de la valeur du pH alcalin, le temps étant d'autant plus long que le pH est proche de la neutralité.

Si pour une raison quelconque, la viscosité maximum du latex est indésirable, il est possible de stopper l'élévation de la viscosité et de la stabiliser en ramenant le latex à pH acide, par exemple par addition d'une solution acide. Une nouvelle alcalinisation du latex provoque la reprise de l'élévation de la viscosité jusqu'à une valeur voisine du maximum.

Les monomères à mettre en œuvre pour obtenir les latex de l'invention sont représentés par l'acétate de vinyle seul ou par l'acétate de vinyle et au moins un autre monomère copolymérisable, tel que les esters vinyliques d'acides monocarboxyliques saturés, ramifiés ou non, ayant de 1 à 12 atomes de carbone, comme le propionate, le « Versatate »® (marque déposée pour des esters d'acides ramifiés en $C_9$-$C_{11}$), le pivalate, le laurate de vinyle et/ou les esters d'acides insaturés mono- ou di-carboxyliques possédant 3 à 6 atomes de carbone et d'alcool possédant 1 à 10 atomes de carbone, comme les acrylates, méthacrylates, maléates, fumarates de méthyle, d'éthyle, de butyle, d'éthylhexyle.

Les comonomères sont mis en œuvre en quantités telles que la température de transition vitreuse du polymère obtenu soit comprise entre − 20 et 50 °C et de préférence entre − 10 et 35 °C.

Le ou les monomères sont introduits dans le milieu de polymérisation, soit en totalité avant polymérisation, ou en cours de polymérisation par fractions successives ou en continu, soit en partie avant polymérisation et l'autre partie en cours de polymérisation par fractions successives ou en continu.

Suivant le polymère à obtenir, il est possible d'ajouter au monomère ou au mélange de monomères, un monomère réticulant et/ou un agent limiteur de chaîne.

Le monomère réticulant, mis en œuvre en proportions comprises entre 0 et 10 % et de préférence entre 0 et 3 % en poids par rapport au(x) monomère(s), est représenté plus particulièrement par les acrylate et méthacrylate de vinyle, le divinyléther, les acrylates et méthacrylates de mono- ou poly-alkylène ($C_2$-$C_4$) glycol, le phtalate d'allyle, le cyanurate de triallyle, le tétraallyloxyéthane, les diallylsulfosuccinates alcalins, les condensats d'acides carboxyliques ($C_3$-$C_5$) insaturés et de polyols, comme par exemple, les acrylate et méthacrylate de triméthylolpropane.

L'agent limiteur de chaîne, mis en œuvre en proportions comprises entre 0 et 10 et de préférence entre 0 et 3 % en poids par rapport au(x) monomère(s), est représenté, entre autres par les hydrocarbures halogénés, tels que chlorure de méthylène, chloroforme, tétrachlorure de carbone, bromoforme, tétrabromure de carbone, dichloréthane, trichloréthane ; les alcools aliphatiques ayant 1 à 4 atomes de carbone, tels que alcool méthylique, alcool allylique et de préférence par les mercaptans, tels que laurylmercaptan, dodécylmercaptan, aminophénylmercaptan.

Le monomère réticulant et/ou l'agent limiteur de chaîne sont introduits seuls ou en mélange, de toute façon connue en soi, avant ou en cours de polymérisation, par exemple en même temps que le ou les monomère(s), soit simultanément, soit plus particulièrement en solution dans le monomère ou le mélange des monomères.

La concentration en monomère(s) du milieu de polymérisation est avantageusement comprise entre 10 et 70 % en poids.

En tant qu'initiateur, on utilise un initiateur hydrosoluble classique de la polymérisation en émulsion et plus particulièrement l'eau oxygénée, les persulfates alcalins, les dérivés diazoïques hydrosolubles ou les systèmes redox à base d'oxydants comme l'eau oxygénée, les peroxydes ou hydroperoxydes organiques et de réducteurs comme les sulfites et bisulfites alcalins, les amines, l'hydrazine, les formaldéhydesulfoxylates métalliques. L'initiateur est mis en œuvre dans des proportions de l'ordre de 0,05 à 4,5 % et de préférence 0,1 à 2 % en poids du ou des monomères. Il est introduit dans le milieu de polymérisation en totalité avant polymérisation ou en cours de polymérisation par fractions successives ou en continu, ou encore en partie avant polymérisation, l'autre partie étant ajoutée en cours de polymérisation par fractions successives ou en continu, particulièrement lorsque la durée de vie de l'initiateur à la température de polymérisation est faible.

Le colloïde protecteur à mettre en œuvre pour obtenir les latex de l'invention comprend deux constituants : a) un polymère de N-méthylolacrylamide ou de N-méthylolméthacrylamide soluble dans l'eau et b) un polymère de polyéthylène glycol soluble dans l'eau.

Par polymère a) on entend : soit des homopolymères de N-méthylolacrylamide ou de N-méthylolméthacrylamide ; soit des copolymères de N-méthylolacrylamide et N-méthylolméthacrylamide en toutes proportions ; soit des copolymères de N-méthylolacrylamide et/ou N-méthylolméthacrylamide avec au moins un amide des acides acrylique et méthacrylique et de leurs dérivés N-alkylés, dont le groupe alkyle possède 1 à 4 atomes de carbone et peut être substitué par des groupes amine ou alcoxy possédant 1 à 4 atomes de carbone ou dont le groupe alkyle possède 2 à 4 atomes de carbone et peut être substitué par un groupe hydroxy, tels que, par exemple, acrylamide, méthacrylamide, N-méthylacrylamide, N,N-diméthylacrylamide, N-isopropylacrylamide, N-méthylaminoisopropylacrylamide, N-méthoxyméthylacrylamide, N-isobutoxyméthylacrylamide, dans lesquels l'amide d'acides acrylique ou méthacrylique représente au plus 90 % en poids du copolymère ; soit encore des mélanges des homopolymères et copolymères ci-dessus.

Les homo- et co-polymères de N-méthylolacrylamide et N-méthylolméthacrylamide peuvent être préparés par exemple par polymérisation en solution aqueuse du ou des amides à une concentration de 0,1 à 7 % en poids, en présence d'un initiateur radicalaire hydrosoluble et/ou de rayonnements ultra-violets, à une température comprise entre 0 et 90 °C.

L'initiateur à mettre en œuvre dans cette polymérisation est un initiateur radicalaire hydrosoluble classique de la polymérisation en solution, tel que l'eau oxygénée, les persulfates alcalins, les dérivés diazoïques hydrosolubles ou les systèmes redox à base d'oxydants comme l'eau oxygénée, les peroxydes ou hydroperoxydes organiques et de réducteurs comme les sulfites et bisulfites alcalins, les amines, l'hydrazine ou les formaldéhyldesulfoxylates métalliques. Tous ces initiateurs sont mis en œuvre seuls ou en mélange, à raison de 0,1 à 10 % en poids du ou des amides.

Ces homo- et co-polymères de N-méthylolacrylamide et N-méthylolméthacrylamide peuvent être réticulés par des quantités pouvant aller jusqu'à 50 % en poids du ou des amides d'agents réticulants hydrosolubles représentés par les N,N'-alkylidène en $C_1$-$C_4$ bis (amide d'acide insaturé en $C_3$-$C_5$), tels que N,N'-méthylène bis (acrylamide), N,N'-méthylène bis (méthacrylamide) ; l'éther diallylique, le sulfosuccinate diallylique ; l'oxyéthane polyallylique.

Par polymère b) on entend : soit des homopolymères d'éthylène glycol ; soit des copolymères d'éthylène glycol et de propylène glycol et/ou de butylène glycol, dans lesquels la proportion d'éthylène glycol est d'au moins 70 % en poids ; soit des mélanges d'homopolymères ou de copolymères de masse moléculaire différente ; soit encore des mélanges d'homopolymères et de copolymères. Ces homo- et copolymères d'éthylène glycol possèdent une masse moléculaire comprise entre 1 000 et 50 000 et de préférence entre 3 000 et 35 000. Ce sont des produits en eux-mêmes connus et commercialisés.

Selon l'invention, le colloïde protecteur est constitué de 15 à 70 % en poids du polymère a) et de 30 à 85 % en poids du polymère b). Le colloïde est utilisé à raison de 0,1 à 5 % et de préférence 0,5 à 3 % en poids du ou des monomères à polymériser.

Les deux constituants du colloïde protecteur sont mis en œuvre sous forme de solutions aqueuses.

La solution de polymère a) peut être utilisée à tout moment après sa préparation, mais, selon une forme préférée de l'invention, elle est utilisée immédiatement après sa préparation.

Les deux solutions peuvent être introduites séparément dans le milieu de polymérisation en émulsion, ou bien le polymère b) peut être dissous dans la solution de polymère a) ou encore le polymère b) peut être présent dans la préparation du polymère a). Ces introductions sont effectuées soit en une seule fois avant polymérisation, soit en cours de polymérisation par fractions successives ou en continu.

Dans la ou les solutions aqueuses à utiliser, le polymère a) plus le polymère b) représentent de 0,1 à 15 % en poids de l'eau.

Afin d'assurer la stabilité du milieu de polymérisation de l'acétate de vinyle et du latex à obtenir, il peut être avantageux d'ajouter un ou plusieurs agents émulsifiants au milieu réactionnel. Ces agents émulsifiants, anioniques et/ou non ioniques, sont des produits classiques des polymérisations en émulsion.

Parmi les agents émulsifiants anioniques, peuvent être cités les sels d'acides gras ; les alkylsulfates, alkylsulfonates, alkylarylsulfonates, alkylsulfosuccinates, alkylphosphates alcalins ; les sulfonates d'éthers alkylphénolpolyglycoliques ; les sels d'esters d'acides alkylsulfopolycarboxyliques ; les produits de condensation des acides gras avec les acides oxy- et amino-alcanesulfoniques ; les dérivés sulfatés des éthers polyglycoliques ; les esters sulfatés d'acides gras et de polyglycols ; les alcanolamides d'acides gras sulfatés.

Parmi les agents émulsifiants non ioniques, sont à mentionner les esters gras de polyalcools, les alcanolamides d'acides gras, les polyoxydes d'éthylène, les copolyoxydes d'éthylène et de propylène, les alcools et alkylphénols oxyéthylénés, les alcools et alkylphénols oxyéthylénés et sulfatés.

Les quantités d'agent(s) émulsifiant(s) à mettre en œuvre sont de l'ordre de 0,1 à 3 % en poids par rapport au(x) monomère(s) et leur introduction dans le milieu réactionnel peut être effectuée soit en totalité avant la polymérisation, soit en partie avant la polymérisation, la partie complémentaire étant ajoutée au milieu réactionnel au cours de la polymérisation par fractions successives ou en continu, soit encore en totalité au cours de la polymérisation par fractions successives ou en continu, suivant le diamètre moyen des particules du latex à obtenir. Selon une forme particulière de réalisation de l'invention, l'agent émulsifiant est ajouté au milieu de préparation du polymère de N-méthylolacrylamide ou N-méthylolméthacrylamide, premier constituant du colloïde protecteur.

Selon la nature du ou des monomères mis en œuvre et afin d'éviter l'hydrolyse du polymère d'acétate de vinyle, il peut être avantageux de maintenir le milieu de polymérisation à un pH de 3 à 7. Ce qui peut être obtenu par addition au milieu d'un régulateur de pH représenté notamment par une base, telle que la soude ou l'ammoniaque et/ou par un tampon, tel que l'acétate de sodium, le bicarbonate de sodium, le borax. Le régulateur est ajouté au milieu, seul ou en mélange, en totalité ou en partie avant la polymérisation, la partie complémentaire étant ajoutée au cours de la polymérisation par fractions successives ou en continu, ou encore en totalité au cours de la polymérisation par fractions successives ou en continu et plus particulièrement dans le milieu de préparation du polymère de N-méthylolacrylamide ou N-méthylolméthacrylamide, premier constituant du colloïde protecteur.

La température de polymérisation, fonction de l'initiateur mis en œuvre et du polymère à obtenir, est généralement comprise entre 0 et 95 °C et de préférence entre 20 et 90 °C.

Selon une variante, les latex sont préparés par polymérisation en présence d'un polymère semence, ce qui assure un meilleur contrôle de la granulométrie des particules du latex à obtenir. Ce polymère semence peut être identique au polymère à obtenir ou bien être différent. Il est obtenu par polymérisation en émulsion aqueuse d'acétate de vinyle et/ou d'au moins un des monomères énumérés plus haut. Le latex de polymère semence obtenu est ajouté au milieu de polymérisation en même temps que l'un des constituants du colloïde protecteur, ou en même temps que le mélange de ces deux constituants. Le polymère semence peut également être préparé en présence de l'un ou des deux constituants du colloïde protecteur.

Suivant l'application envisagée du latex de polymère d'acétate de vinyle, il est possible d'ajouter, avant, pendant ou après polymérisation, un agent de plastification dudit polymère dans des proportions comprises entre 0 et 20 % et de préférence entre 0 et 10 % en poids par rapport au polymère. Cet agent de plastification, mis en œuvre seul ou en mélange, est choisi parmi les plastifiants et agents de coalescence classiques du polyacétate de vinyle, tels que les phtalates d'alkyle ($C_4$-$C_6$) halogénés ou non, comme les phtalates de dibutyle, de diéthyle, de trichloréthyle ; les phtalate, adipate et dibenzoate d'éthylène glycol, l'acétate de butylcarbitol, le glycolate de butyle, la triacétine de glycérol, les succinates, glutarates, adipates dipropyliques ou diisobutyliques, les phosphates de tricrésyle et de triphényle.

Les latex de polymères d'acétate de vinyle sont utilisés comme liants dans la fabrication des peintures, colles, papiers, textiles, notamment non tissés, revêtements de sol, additifs pour mortiers.

On donne, ci-après, à titre indicatif et non limitatif, des exemples de réalisation de l'invention, dans lesquels :

— les pourcentages sont en poids ;

— la viscosité du latex est mesurée à 20 °C, au viscosimètre Brookfield RVT, vitesse 50 t/min ;

— le diamètre des particules est mesuré par microscopie électronique ;

— la température de transition vitreuse (Tg) du polymère est mesurée par analyse calorimétrique différentielle ;

— la tenue à l'eau du polymère est déterminée en plaçant une goutte d'eau déminéralisée sur un film de polymère de 300 $\mu$m obtenu par dépôt du latex sur une plaque de verre transparent, suivi d'un séchage 2 h à 50 °C, puis 24 h à température ambiante. La tenue à l'eau est exprimée par le temps nécessaire pour que le film s'opacifie à l'emplacement de la goutte d'eau ;

— la tenue à l'abrasion humide est mesurée à l'aide d'un abrasimètre à 6 têtes, sous une charge de 1 000 g, effectuant au maximum 10 000 aller-retours (cycles), sur un film de peinture de 100 $\mu$m, déposé au filmographe sur une plaque de polychlorure de vinyle rigide et séché une semaine à température ambiante. Après un nombre de cycles donné, le taux d'usure est déterminé.

## Exemple 1

### Préparation du colloïde protecteur

Dans un réacteur muni d'un réfrigérant, d'une arrivée d'azote et d'un agitateur, sont introduits :

1 500 g d'eau désionisée ;
7 g d'acrylamide ;
11 g d'une solution aqueuse à 60 % de N-méthyloacrylamide ;
5,5 g d'acétate de sodium ;
68,5 g d'une solution aqueuse à 25 % de tétradécylsulfonate de sodium ;
18 g de polyéthylène glycol de masse moléculaire 10 000.

L'air est éliminé par passage d'un courant d'azote, qui est maintenu et le mélange est agité. Après dissolution, la solution est chauffée à 60 °C.

Dès que la solution est à 60 °C, 0,7 g de persulfate d'ammonium en solution dans 50 cm³ d'eau sont introduits et la solution est maintenue à 60 °C pendant 1 heure. Le passage du courant d'azote est alors arrêté.

### Polymérisation

A la solution de colloïde protecteur obtenue, 2 g de persulfate d'ammonium en solution dans 50 cm³ d'eau sont ajoutés. Puis sont introduits en continu 1 800 g d'acétate de vinyle à débit constant en 3 heures.

Après 15 minutes du début de l'introduction, le mélange réactionnel est chauffé à 80 °C, puis maintenu à cette température et 2 g de persulfate d'ammonium dans 200 cm³ d'eau sont introduits en continu à débit constant en 2 h 45 min.

Deux heures après la fin des introductions, le mélange réactionnel est refroidi.

Un latex de polyacétate de vinyle est obtenu, qui présente les caractéristiques suivantes :

pH    4,2
viscosité    350 mPa · s

5

| concentration | 50 % |
| diamètre des particules | 0,2-0,5 µm |
| Tg du polymère | 34 °C |
| Tenue à l'eau | 15 min |

Un polyacétate de vinyle, préparé par polymérisation en émulsion en présence d'alcool polyvinylique en quantité égale à celle du colloïde protecteur de l'exemple 1, s'opacifie immédiatement.

Le latex obtenu est divisé en trois parties A, B et C.

A. Par addition d'ammoniaque le pH du latex est amené à 8 ; la viscosité du latex atteint 5 000 mPa·s après 15 h et se stabilise.

B. Par addition d'ammoniaque le pH du latex est amené à 9 ; la viscosité atteint 5 000 mPa·s après 6 h et se stabilise. L'addition d'acide acétique, pour avoir un pH de 5, ne modifie pas sensiblement la viscosité qui se stabilise à 4 900 mPa·s.

C. Par addition d'ammoniaque le pH du latex est amené à 9 ; la viscosité atteint 3 000 mPa·s après 2 h. L'addition d'acide acétique, pour avoir un pH de 5, arrête l'augmentation de la viscosité et la stabilise à 2 800 mPa·s. L'addition d'ammoniaque pour que le pH du latex soit à 9 permet l'augmentation de la viscosité jusqu'à 4 700 mPa·s en 4 h et sa stabilisation.

## Exemple 2

L'exemple 1 est répété, avec :

9 g de polyéthylène glycol de masse moléculaire 10 000 et 9 g de polyéthylène glycol de masse moléculaire 6 000, à la place des 18 g de polyéthylène glycol de masse moléculaire 10 000 et avec :

1 494 g d'acétate de vinyle et 306 g d'acrylate de butyle, à la place des 1 800 g d'acétate de vinyle.

Un latex de copolymère acétate de vinyle/acrylate de butyle 83/17 est obtenu, qui présente les caractéristiques suivantes :

| pH | 4,2 |
| viscosité | 330 mPa·s |
| concentration | 50,2 % |
| diamètre moyen des particules | 0,2-0,5 µm |
| Td du copolymère | 20 °C. |

Le latex à pH 9 possède après 6 heures une viscosité de 5 000 mPa·s.

## Exemple 3

Préparation du colloïde protecteur

Dans un réacteur muni d'un réfrigérant, d'une arrivée d'azote et d'un agitateur, sont introduits :

1 250 g d'eau désionisée ;
3,4 g d'acrylamide ;
21 g d'une solution aqueuse à 48 % de N-méthylolacrylamide ;
5,5 g d'acétate de sodium ;
18 g de laurylsulfate de sodium ;
18 g de polyéthylène glycol de masse moléculaire 6 000.

L'air est éliminé par passage d'un courant d'azote, qui est maintenu et le mélange est agité. Après dissolution, la solution est chauffée à 60 °C.

Dès que la solution est à 60 °C, 0,7 g de persulfate d'ammonium en solution dans 50 cm³ d'eau sont introduits et la solution est maintenue à 60 °C pendant 1 heure. Le passage du courant d'azote est alors arrêté.

Polymérisation

A la solution de colloïde protecteur obtenue, 2 g de persulfate d'ammonium en solution dans 50 cm³ d'eau et 1,8 g de laurylmercaptan sont ajoutés. Puis est introduit en continu à débit constant en 3 heures, un mélange de 1 530 g d'acétate de vinyle et 270 g d'acrylate de butyle.

Après 15 minutes du début de l'introduction, le mélange réactionnel est chauffé à 80 °C, puis maintenu à cette température et 2 g de persulfate d'ammonium dans 200 cm³ d'eau sont introduits en continu à débit constant en 2 h 45 min.

Deux heures après la fin des introductions, le mélange réactionnel est refroidi.

Un latex de copolymère acétate de vinyle/acrylate de butyle 85/15 est obtenu, qui présente les caractéristiques suivantes :

| | |
|---|---|
| pH | 4,4 |
| viscosité | 620 mPa · s |
| concentration | 54,9 % |
| diamètre des particules | 0,2-0,5 μm |
| Tg du polymère | 22 °C. |

Par addition de soude le latex est amené à pH 10 ; sa viscosité atteint 7 000 mPa · s après 1 heure et se stabilise.

Exemple 4

Préparation du colloïde protecteur

Dans un réacteur muni d'un réfrigérant, d'une arrivée d'azote et d'un agitateur, sont introduits :

1 100  g d'eau désionisée ;
   5,5 g d'acrylamide ;
   9,5 g d'une solution aqueuse à 60 % de N-méthylolacrylamide ;
   4,5 g d'acétate de sodium ;
    66  g d'une solution aqueuse à 22,75 % de tétradécylsulfonate de sodium ;
     5  g de polyéthylène glycol de masse moléculaire 10 000.

L'air est éliminé par passage d'un courant d'azote, qui est maintenu et le mélange est agité. Après dissolution, la solution est chauffée à 60 °C.

Dès que la solution est à 60 °C, 0,7 g de persulfate d'ammonium en solution dans 50 cm$^3$ d'eau sont introduits et la solution est maintenue à 60 °C pendant 1 heure. Le passage du courant d'azote est alors arrêté.

Polymérisation

A la solution de colloïde protecteur obtenue, 2 g de persulfate d'ammonium en solution dans 50 cm$^3$ d'eau sont ajoutés. Puis est introduit en continu à débit constant en 3 heures, un mélange de 1 125 g d'acétate de vinyle et 375 g de « Versatate VEOVA 10 »$^®$ (marque déposée).

Le « Versatate VEOVA 10 » est un mélange d'esters vinyliques d'acides monocarboxyliques ramifiés en C$_9$ à C$_{11}$.

Après 15 minutes du début de l'introduction, le mélange réactionnel est chauffé à 80 °C, puis maintenu à cette température et 2,5 g de persulfate d'ammonium dans 200 cm$^3$ d'eau sont introduits en continu à débit constant en 2 h 45 min.

Deux heures après la fin des introductions, le mélange réactionnel est refroidi.

Un latex de copolymère acétate de vinyle/« Versatate VEOVA 10 » 75/25 est obtenu, qui présente les caractéristiques suivantes :

| | |
|---|---|
| pH | 4,8 |
| viscosité | 540 mPa · s |
| concentration | 50,9 % |
| diamètre moyen des particules | 0,15-0,45 μm |
| Tg du copolymère | 20 °C |
| Tenue à l'eau | 16 min. |

Un copolymère acétate de vinyle/« Versatate » 75/25, préparé en présence de polyvinylpyrrolidone en quantité égale à celle du colloïde protecteur de l'exemple 4, possède une tenue à l'eau de 30 s.

Application

Avec le latex obtenu, une peinture est préparée par addition d'une pâte pigmentaire et d'ammoniaque, de manière à avoir une concentration pigmentaire en volume (CPV) de 76 % et un pH de 8,5.

La tenue à l'abrasion humide est déterminée sur la peinture obtenue, et à titre comparatif, sur une peinture de même CPV préparée avec un latex de copolymère acétate de vinyle/« Versatate VEOVA 10 » 75/25 contenant de la polyvinylpyrrolidone en quantité identique à celle du colloïde protecteur de l'exemple 4.

Les résultats sont reportés dans le tableau ci-après :

(Voir Tableau page 8)

7

| Taux d'usure | Exemple 4 | Essai comparatif |
|---|---|---|
| Après 250 cycles | 0 % | 40 % |
| Après 1 000 cycles | 0 % | 100 % |
| Après 10 000 cycles | 0 % | 100 % |

## Exemple 5

Préparation du colloïde protecteur

Dans un réacteur muni d'un réfrigérant, d'une arrivée d'azote et d'un agitateur, sont introduits :

1 475 g d'eau désionisée ;
30 g d'une solution aqueuse à 60 % de N-méthylolacrylamide ;
5,5 g d'acétate de sodium ;
60 g d'une solution aqueuse à 30 % de tétradécylsulfonate de sodium ;
36 g de polyéthylène glycol de masse moléculaire 10 000.

L'air est éliminé par passage d'un courant d'azote, qui est maintenu et le mélange est agité. Après dissolution, la solution est chauffée à 60 °C.

Dès que la solution est à 60 °C, 0,7 g de persulfate d'ammonium en solution dans 50 $cm^3$ d'eau sont introduits et la solution est maintenue à 60 °C pendant 1 heure. Le passage du courant d'azote est alors arrêté.

Polymérisation

A la solution de colloïde obtenue, 2 g de persulfate d'ammonium en solution dans 50 $cm^3$ d'eau sont ajoutés. Puis est introduit, à débit constant, en 3 heures, un mélange de 1 350 g d'acétate de vinyle et de 450 g de « Versatate VEOVA 10 ».

Après 15 minutes du début de l'introduction, le mélange réactionnel est chauffé à 80 °C, puis maintenu à cette température et 2,5 g de persulfate d'ammonium dans 200 $cm^3$ d'eau sont introduits en continu à débit constant en 2 h 45 min.

Deux heures après la fin des introductions, le mélange réactionnel est refroidi.

Un latex de copolymère acétate de vinyle/« Versatate » 75/25 est obtenu, qui présente les caractéristiques suivantes :

| | |
|---|---|
| pH | 4,4 |
| viscosité | 368 mPa · s |
| concentration | 51,4 % |
| diamètre des particules | 0,15-0,45 μm |
| Tg du copolymère | 21 °C. |

Par addition d'ammoniaque, le latex est amené à pH 9 ; sa viscosité atteint 14 000 mPa · s après 4 h et se stabilise.

## Exemple 6

Préparation du colloïde

Dans un réacteur muni d'un réfrigérant, d'une arrivée d'azote et d'un agitateur, sont introduits :

2 580 g d'eau désionisée ;
33,75 g d'acrylamide ;
56,25 g d'une solution aqueuse à 60 % de N-méthylolacrylamide ;
27 g d'acétate de sodium ;
75 g d'une solution à 30 % de tétradécylsulfonate de sodium ;
90 g de polyéthylène glycol de masse moléculaire 10 000.

L'air est éliminé par passage d'un courant d'azote qui est maintenu pendant la préparation du colloïde. Le mélange est agité.

Après dissolution, la solution est chauffée à 60 °C, température qui est maintenue.

Dès que la solution est à 60 °C, 3,5 g de persulfate d'ammonium dans 100 $cm^3$ d'eau sont introduits. Après 1 heure de réaction, le passage d'azote est arrêté.

Préparation d'une semence

4 g de persulfate d'ammonium et 225 g d'acrylate d'éthyle sont ajoutés à la solution de colloïde.

Après 20 minutes, le milieu réactionnel est chauffé à 80 °C, maintenu à cette température pendant 1 h, puis refroidi à température ambiante.

Polymérisation

Dans un réacteur sont introduits successivement :

650 g de la semence obtenue précédemment ;
980 g d'eau désionisée ;
7 g de laurylmercaptan.

Le mélange est agité et chauffé à 80 °C, température qui est maintenue pendant la durée de la réaction.

Dès que le mélange est à 80 °C, on lui ajoute 2 g de persulfate d'ammonium en solution dans 10 cm³ d'eau. On introduit alors, simultanément, à débit constant en 3 heures, d'une part un mélange contenant 1 251 g d'acétate de vinyle et 450 g de « Versatate VEOVA 10 » et d'autre part, une solution contenant 100 g d'eau désionisée, 2 g de persulfate d'ammonium, et 82,5 g d'une solution aqueuse à 22 % de nonylphénol polyoxyéthyléné (30 unités oxyde d'éthylène).

2 heures après la fin des introductions, le mélange réactionnel est refroidi.

Un latex de terpolymère acétate de vinyle/Versatate/acrylate d'éthyle 72,5/25/2,5 est obtenu, qui présente les caractéristiques suivantes :

| | |
|---|---|
| pH | 3,5 |
| viscosité | 2 100 mPa · s |
| concentration | 51,6 % |
| diamètre des particules | 0,25-0,55 μm |
| Tg du terpolymère | 20 °C. |

Par addition d'ammoniaque le pH du latex est amené à 9 ; la viscosité atteint 7 500 mPa · s après 4 h et se stabilise.

**Revendications** (Pour les Etats contractants : BE, CH, DE, FR, GB, IT, LI, NL SE)

1. Latex de polymères d'acétate de vinyle constitués de particules de diamètre moyen compris entre 0,05 et 1 μm de polymères ayant une température de transition vitreuse comprise entre − 20 et 50 °C, dont la concentration est comprise entre 10 et 70 % en poids, susceptible d'être obtenus par polymérisation en émulsion aqueuse de l'acétate de vinyle seul ou en mélange avec au moins un monomère copolymérisable en présence de 0,05 à 4,5 % en poids par rapport au poids du ou des monomères d'un initiateur et éventuellement de 0,1 à 3 % en poids par rapport au poids du ou des monomères d'un agent émulsifiant, caractérisés en ce que l'agent émulsifiant éventuel est un agent émulsifiant anionique et/ou un agent émulsifiant cationique et en ce que l'opération de polymérisation est réalisée en outre en présence de 0,1 à 5 % en poids par rapport au poids du ou des monomères à polymériser d'un colloïde protecteur en solution à 0,1-15 % en poids dans de l'eau, ledit colloïde protecteur étant formé de 15 à 10 % en poids d'un polymère de N-méthylolacrylamide ou de N-méthylolméthacrylamide soluble dans l'eau et de 30 à 85 % en poids d'un polymère d'éthylène glycol de masse moléculaire comprise entre 1 000 et 50 000 soluble dans l'eau.

2. Latex selon la revendication 1, caractérisés en ce que le monomère copolymérisable avec l'acétate de vinyle est choisi parmi les esters vinyliques d'acides monocarboxyliques saturés ramifiés ou non ($C_1$-$C_{12}$) et/ou les esters d'acides insaturés mono- ou dicarboxyliques ($C_3$-$C_6$) et d'alcool ($C_1$-$C_{10}$) et est mis en œuvre en quantité telle que le polymère obtenu possède une température de transition vitreuse comprise entre − 20 et 50 °C.

3. Latex selon l'une des revendications 1 ou 2, caractérisés en ce que le polymère de N-méthylolacrylamide ou de N-méthylolméthacrylamide est un homopolymère, un copolymère de ces amides, un copolymère d'au moins un de ces amides avec au moins un amide des acides acrylique et méthacrylique et de leurs dérivés N-alkylés ($C_1$-$C_4$), substitués ou non par des groupes amine ou alcoxy ($C_1$-$C_4$), ou de leurs dérivés N-alkylés ($C_2$-$C_4$) substitués par un groupe hydroxy, un mélange de ces homo- et co-polymères et en ce que le polymère de N-méthylolacrylamide ou de N-méthylolméthacrylamide est éventuellement réticulé par un agent de réticulation hydrosoluble.

4. Latex selon la revendication 3, caractérisés en ce que le polymère de N-méthylolacrylamide ou de N-méthylolméthacrylamide est obtenu par polymérisation en solution aqueuse du ou des amides à une concentration de 0,1 à 7 % en poids, en présence d'un initiateur radicalaire hydrosoluble et/ou de rayonnements ultra-violets à une température de 0 à 90 °C.

5. Latex selon l'une des revendications 1 à 4, caractérisés en ce que le polymère d'éthylène glycol est un homopolymère d'éthylène glycol, ou un copolymère d'éthylène glycol et de propylène glycol et/ou de

9

butylène glycol dans lequel la proportion d'éthylène glycol est supérieure à 70 % en poids, ou en mélange d'homopolymères et/ou de co-polymères d'éthylène glycol.

6. Latex selon l'une des revendications 1 à 5, caractérisés en ce qu'un polymère semence, semblable ou différent du polymère à obtenir, est présent dans le milieu de polymérisation.

**Revendications** (pour l'Etat contractant AT)

1. Procédé de préparation de latex de polymères d'acétate de vinyle constitués de particules de diamètre moyen compris entre 0,05 et 1 μm de polymères ayant une température de transition vitreuse comprise entre − 20 et 50 °C, dont la concentration est comprise entre 10 et 70 % en poids, par polymérisation en émulsion aqueuse de l'acétate de vinyle seul ou en mélange avec au moins un monomère copolymérisable en présence de 0,05 à 4,5 % en poids par rapport au poids du ou des monomères d'un initiateur et éventuellement de 0,1 à 3 % en poids par rapport au poids du ou des monomères d'un agent émulsifiant, caractérisé en ce que l'agent émulsifiant éventuel est un agent émulsifiant anionique et/ou un agent émulsifiant cationique et en ce que l'opération de polymérisation est réalisée en outre en présence de 0,1 à 5 % en poids par rapport au poids du ou des monomères à polymériser d'un colloïde protecteur en solution à 0,1-15 % en poids dans de l'eau, ledit colloïde protecteur étant formé de 15 à 70 % en poids d'un polymère de N-méthylolacrylamide ou de N-méthylolméthacrylamide soluble dans l'eau et de 30 à 85 % en poids d'un copolymère d'éthylène glycol de masse moléculaire comprise entre 1 000 et 50 000 soluble dans l'eau.

2. Procédé selon la revendication 1, caractérisé en ce que le monomère copolymérisable avec l'acétate de vinyle est choisi parmi les esters vinyliques d'acides monocarboxyliques saturés ramifiés ou non ($C_1$-$C_{12}$) et/ou les esters d'acides insaturés mono- ou dicarboxyliques ($C_3$-$C_6$) et d'alcool ($C_1$-$C_{10}$) et est mis en oeuvre en quantité telle que le polymère obtenu possède une température de transition vitreuse comprise entre − 20 et 50 °C.

3. Procédé selon l'une des revendications 1 ou 2, caractérisé en ce que le polymère de N-méthylolacrylamide ou de N-méthylolméthacrylamide est un homopolymère, un copolymère de ces amides, un copolymère d'au moins un de ces amides avec au moins un amide des acides acrylique et méthacrylique et de leurs dérivés N-alkylés ($C_1$-$C_4$), substitués ou non par des groupes amine ou alcoxy ($C_1$-$C_4$), ou de leurs dérivés N-alkylés ($C_2$-$C_4$) substitué par un groupe hydroxy, un mélange de ces homo- et co-polymères.

4. Procédé selon la revendication 3, caractérisé en ce que le polymère de N-méthylolacrylamide ou de N-méthylolméthacrylamide est obtenu par polymérisation en solution aqueuse du ou des amides à une concentration de 0,1 à 7 % en poids, en présence d'un initiateur radicalaire hydrosoluble et/ou de rayonnements ultra-violets à une température de 0 à 90 °C.

5. Procédé selon l'une des revendications 1 à 4, caractérisé en ce que le polymère de N-méthylolacrylamide ou N-méthylolméthacrylamide est réticulé par un agent de réticulation hydrosoluble.

6. Procédé selon l'une des revendications 1 à 5, caractérisé en ce que le polymère d'éthylène glycol est un homopolymère d'éthyène glycol, ou un copolymère d'éthylène glycol et de propylène glycol et/ou de butylène glycol dans lequel la proportion d'éthylène glycol est supérieure à 70 % en pcids, ou en mélange d'homopolymères et/ou de co-polymères d'éthylène glycol.

7. Procédé selon l'une des revendications 1 à 6, caractérisé en ce qu'un polymère semence, semblable ou différent du polymère à obtenir, est présent dans le milieu de polymérisation.

**Claims** (for the Contracting States : BE, CH, DE, FR, GB, IT, LI, NL, SE)

1. Latexes of vinyl acetate polymers, comprising particles of a mean diameter of between 0.05 and 1 μm of polymers having a vitreous transition temperature of between − 20 and 50 °C, the concentration of which is between 10 and 70 % by weight, which are capable of being produced by polymerisation in aqueous emulsion of vinyl acetate alone or mixed with at least one copolymerisable monomer in the presence of from 0.05 to 4.5 % by weight with respect to the weight of the monomer or monomers of an initiator and optionally from 0.1 % to 3 % by weight with respect to the weight of the monomer or monomers of an emulsifying agent characterised in that the optional emulsifying agent is an anionic emulsifying agent and/or a cationic emulsifying agent and that the polymerisation operation is also carried out in the presence of from 0.1 to 5 % by weight with respect to the weight of the monomer or monomers to be polymerised of a protective colloid in 0.1 to 15 % by weight solution in water, said colloid being formed by from 15 to 70 % by weight of a polymer of N-methylolacrylamide or N-methylolmethacrylamide which is water-soluble and from 30 to 85 % by weight of a copolymer of ethylene glycol having a molecular weight of from 1,000 to 50,000, which is water-soluble.

2. Latexes according to claim 1 characterised in that the monomer which is copolymerisable with vinyl acetate is selected from vinyl esters of branched or unbranched saturated monocarboxylic acids ($C_1$-$C_{12}$) and/or esters of unsaturated mono- or dicarboxylic acids ($C_3$-$C_6$) and alcohol ($C_1$-$C_{10}$) and is used in an amount such that the polymer produced has a vitreous transition temperature of between − 20 and 50 °C.

3. Latexes according to one of claims 1 or 2 characterised in that the N-methylolacrylamide or N-methylolmethacrylamide polymer is a homopolymer, a copolymer of said amides, a copolymer of at least one of said amides with at least one amide of acrylic and methacrylic acids and N-alkylated ($C_1$-$C_4$) derivatives thereof, which may or may not be substituted by amine or alkoxy ($C_1$-$C_4$) groups, or their N-alkylated ($C_2$-$C_4$) derivatives which are substituted by a hydroxy group, and a mixture of said homo- and copolymers, and that the N-methylolacrylamide or N-methylolmethacrylamide polymer is optionally cross-linked by a water soluble cross-linking agent.

4. Latexes according to claim 3 characterised in that the N-methylolacrylamide or N-methylolmethacrylamide polymer is produced by polymerisation in aqueous solution of the amide or amides in a concentration of from 0.1 to 7 % by weight in the presence of a water-soluble radical-forming intiator and/or ultra-violet radiation at a temperature of from 0 to 90 °C.

5. Latexes according to one of claims 1 to 4 characterised in that the ethylene glycol polymer is an ethylene glycol homopolymer or a copolymer of ethylene glycol and propylene glycol and/or butylene glycol in which the proportion of ethylene glycol is higher than 70 % by weight, or a mixture of homopolymers and/or copolymers of ethylene glycol.

6. Latexes according to one of claims 1 to 5 characterised in that a seed polymer which is similar to or different from the polymer to be produced is present in the polymerisation medium.

**Claims** (for the Contracting State AT)

1. A process for the preparation of latexes of vinyl acetate polymers, which comprise particles of a mean diameter of between 0.05 and 1 µm of polymers having a vitreous transition temperature of between − 20 and 50 °C, the concentration of which is between 10 and 70 % by weight, by polymerisation in aqueous emulsion of vinyl acetate alone or mixed with at least one copolymerisable monomer in the presence of from 0.05 to 4.5 % by weight with respect to the weight of the monomer or monomers of an initiator and optionally from 0.1 % to 3 % by weight with respect to the weight of the monomer or monomers of an emulsifying agent characterised in that the optional emulsifying agent is an anionic emulsifying agent and/or a cationic emulsifying agent and that the polymerisation operation is also carried out in the presence of from 0.1 to 5 % by weight with respect to the weight of the monomer or monomers to be polymerised of a protective colloid in 0.11 to 15 % by weight solution in water, said colloid being formed by from 15 to 70 % by weight of a polymer of N-methylolacrylamide or N-methylolmethacrylamide which is water-soluble and from 30 to 85 % by weight of a copolymer of ethylene glycol having a molecular weight of from 1,000 to 50,000, which is water-soluble.

2. A process according to claim 1 characterised in that the monomer which is copolymerisable with vinyl acetate is selected from vinyl esters of branched or unbranched saturated monocarboxylic acids ($C_1$-$C_{12}$) and/or esters of unsaturated mono- or dicarboxylic acids ($C_3$-$C_6$) and alcohol ($C_1$-$C_{10}$), and is used in an amount such that the polymer produced has a vitreous transition temperature of between − 20 and 50 °C.

3. A process according to one of claims 1 and 2 characterised in that the N-methylolacrylamide or N-methylolmethacrylamide polymer is a homopolymer, a copolymer of saids amides, a copolymer of at least one of said amides with at least one amide of acrylic and methacrylic acids and N-alkylated ($C_1$-$C_4$) derivatives thereof, which may or may not be substituted by amine or alkoxy ($C_1$-$C_4$) groups, or their N-alkylated ($C_2$-$C_4$) derivatives which are substituted by a hydroxy group, and a mixture of said homo- and copolymers.

4. A process according to claim 3 characterised in that the N-methylolacrylamide or N-methylolmethacrylamide polymer is produced by polymerisation in aqueous solution of the amide or amides in a concentration of from 0.1 to 7 % by weight in the presence of a water-soluble radical-forming initiator and/or ultra-violet radiation at a temperature of from 0 to 90 °C.

5. A process according to one of claims 1 to 4 characterised in that the N-methylolacrylamide or N-methylolmethacrylamide polymer is cross-linked by a water-soluble cross-linking agent.

6. A process according to one of claims 1 to 5 characterised in that the ethylene glycol polymer is an ethylene glycol homopolymer or a copolymer of ethylene glycol and propylene glycol and/or butylene glycol in which the proportion of ethylene glycol is higher than 70 % by weight, or a mixture of homopolymers and/or copolymers of ethylene glycol.

7. A process according to one of claims 1 to 6 characterised in that a seed polymer which is similar to or different from the polymer to be produced is present in the polymerisation medium.

**Patentansprüche** (für die Vertragsstaaten : BE, CH, DE, FR, GB, IT, LI, NL, SE)

1. Latex aus Vinylacetatpolymeren, die aus polymerteilchen eines mittleren Durchmessers zwischen 0,05 und 1 µm bestehen, die eine Glasübergangstemperatur zwischen − 20 und 50 °C haben und in einer Konzentration zwischen 10 und 70 Gew.% vorliegen, und durch Polymerisation in wässriger Emulsion von Vinylacetat alleine oder in Mischung mit wenigstens einem copolymerisierbaren Monomeren in Gegenwart von 0,05 bis 4,5 Gew.%, bezogen auf das Gewicht des oder der Monomeren, eines Initiators und gegebenenfalls von 0,1 bis 3 Gew.%, bezogen auf das Gewicht des oder der Monomeren eines Emulgiermittels erhältlich sind, dadurch gekennzeichnet, daß das gegebenenfalls zugesetzte Emulgiermittel ein anionisches und/oder kationisches Emulgiermittel ist und daß die Polymerisation außerdem in Gegenwart von 0,1 bis 5 Gew.%, bezogen auf das Gewicht des oder der zu polymerisierenden Monomere, eines zu 0,1 bis 15 Gew.% in Wasser gelösten Schutzkolloids durchgeführt wird, wobei das genannte Schutzkolloid aus 15 bis 70 Gew.% eines wasserlöslichen Polymeren von N-Methylolacrylamid oder von N-Methylolmethacrylamid und aus 30 bis 85 Gew.% eines wasserlöslichen Copolymeren von Äthylenglykol einer Molmasse zwischen 1 000 und 50 000 besteht.

2. Latex nach Anspruch 1, dadurch gekennzeichnet, daß das mit dem Vinylacetat copolymerisierbare Monomer ausgewählt wird unter den Vinylestern der gesättigten, verzweigten oder nicht verzweigten Monocarbonsäuren ($C_1$-$C_{12}$) und/oder den Estern von ungesättigten Mono- oder Dicarbonsäuren ($C_3$-$C_6$) und $C_1$-$C_{10}$-Alkoholen und in einer solchen Menge eingesetzt wird, daß das erhaltene Polymer eine Glasübergangstemperatur zwischen − 20 und 50 °C besitzt.

3. Latex nach einem der Ansprüche 1 oder 2, dadurch gekennzeichnet, daß das Polymere von N-Methylolacrylamid oder von N-Methylolmethacrylamid ein Homopolymeres, ein Copolymeres dieser Amide, ein Copolymeres von wenigstens einem dieser Amide mit wenigstens einem Amid der Acryl- und Methacrylsäure und dessen N-Alkylderivaten ($C_1$-$C_4$), die durch Amin- oder Alkoxy ($C_1$-$C_4$)-gruppen substituiert sein können, oder dessen durch eine Hydroxygruppe substituierten N-Alkylderivaten ($C_2$-$C_4$), oder eine Mischung dieser Homo- und Copolymere ist, und dadurch, daß das Polymere von N-Methylolacrylamid oder N-Methylolmethacrylamid gegebenenfalls mit einem wasserlöslichen Vernetzungsmittel vernetzt wird.

4. Latex nach Anspruch 3, dadurch gekennzeichnet, daß das Polymere von N-Methylolacrylamid oder N-Methylolmethacrylamid durch Polymerisation des Amids oder der Amide bei einer Konzentration von 0,1 bis 7 Gew.% in wässriger Lösung in Gegenwart eines wasserlöslichen Radikalstarters und/oder ultravioletter Bestrahlung bei einer Temperatur zwischen 0 und 90 °C erhalten wird.

5. Latex nach einem der Ansprüche 1 bis 4, dadurch gekennzeichnet, daß das Polymere von Äthylenglykol ein Homopolymeres von Äthylenglykol, oder ein Copolymeres von Äthylenglykol und Propylenglykol und/oder Butylenglykol ist, in der Anteil an Äthylenglykol über 70 Gew.% beträgt, oder eine Mischung von Homopolymeren und/oder Copolymeren von Athylenglykol.

6. Latex nach einem der Ansprüche 1 bis 5, dadurch gekennzeichnet, daß in dem Polymerisationsmilieu ein Saatpolymer, das gleich oder verschieden von dem herzustellenden Polymer ist, anwesend ist.

**Ansprüche** (für den Vertragsstaat AT)

1. Verfahren zur Herstellung von Latex aus Vinylacetatpolymeren, die aus Polymerpartikeln eines mittleren Durchmessers zwischen 0,05 und 1 μm bestehen, die eine Glasübergangstemperatur zwischen − 20 und 50 °C haben und in einer Konzentration zwischen 10 und 70 Gew.% vorliegen, durch Polymerisation in wässriger Emulsion von Vinylacetat alleine oder in Mischung mit wenigstens einem copolymerisierbaren Monomeren in Gegenwart von 0,05 bis 4,5 Gew.%, bezogen auf das Gewicht des oder der Monomeren, eines Initiators und gegebenenfalls von 0,1 bis 3 Gew.%, bezogen auf das Gewicht des oder der Monomeren, eines Emulgiermittels, dadurch gekennzeichnet, daß das gegebenenfalls zugesetzte Emulgiermittel ein anionisches und/oder kationisches Emulgiermittel ist und daß die Polymerisation außerdem in Gegenwart von 0,1 bis 5 Gew.%, bezogen auf das Gewicht des oder der zu polymerisierenden Monomere, eines zu 0,1 bis 15 Gew.% in Wasser gelösten Schutzkolloids durchgeführt wird, wobei das genannte Schutzkolloid aus 15 bis 70 Gew.% eines wasserlöslichen Polymeren von N-Methylolacrylamid oder von N-Methylolmethacrylamid und aus 30 bis 85 Gew.% eines wasserlöslichen Copolymeren von Äthylenglykol einer Molmasse zwischen 1 000 und 50 000 besteht.

2. Verfahren nach Anspruch 1, dadurch gekennzeichnet, daß das mit dem Vinylacetat copolymerisierbare Monomer ausgewählt wird unter den Vinylestern von gesättigten, verzweigten oder nicht verzweigten $C_1$-$C_{12}$-Monocarbonsäuren und/oder den Estern von ungesättigten Mono- oder Dicarbonsäuren ($C_3$-$C_6$) und $C_1$-$C_{10}$-Alkohol und in einer solchen Menge eingesetzt, wird, daß das erhaltene Polymer eine Glasübergangstemperatur zwischen − 20 und 50 °C besitzt.

3. Verfahren nach einem der Ansprüche 1 oder 2, dadurch gekennzeichnet, daß das Polymer von N-Methylolacrylamid oder von N-Methylolmethacrylamid ein Homopolymer, ein Copolymer dieser Amide, ein Copolymer von wenigstens einem dieser Amide mit wenigstens einem Amid der Acryl- und Methacrylsäure und dessen N-Alkylderivaten ($C_1$-$C_4$), die durch Amin- oder Alkoxygruppen ($C_1$-$C_4$) substituiert sein können, oder dessen mit einer Hydroxygruppe substituierten N-Alkylderivaten ($C_2$-$C_4$), oder einer Mischung dieser Homo- und Copolymere ist.

4. Verfahren nach Anspruch 3, dadurch gekennzeichnet, daß das Polymere von N-Methylolacrylamid oder N-Methylolmethacrylamid erhalten wird durch Polymerisation des Amids oder der Amide bei einer Konzentration von 0,1 bis 7 Gew.% in wässriger Lösung in Gegenwart eines wasserlöslichen Radikalstarters und/oder von ultravioletter Bestrahlung bei einer Temperatur von 0 bis 90 °C.

5. Verfahren nach einem der Ansprüche 1 bis 4, dadurch gekennzeichnet, daß das Polymere von N-Methylolacrylamid oder N-Methylolmethacrylamid durch ein wasserlösliches Vernetzungsmittel vernetzt wird.

6. Verfahren nach einem der Ansprüche 1 bis 5, dadurch gekennzeichnet, daß das Polymere von Äthylenglykol ein Homopolymer von Äthylenglykol oder ein Copolymer von Äthylenglykol und Propylenglykol und/oder Butylenglykol ist, in dem der Anteil an Äthylenglykol über 70 Gew.% liegt, oder eine Mischung von Homopolymeren und/oder Copolymeren von Äthylenglykol ist.

7. Verfahren nach einem der Ansprüche 1 bis 6, dadurch gekennzeichnet, daß in dem Polymerisationsmilieu ein Saatpolymeres, das gleich oder verschieden von dem herzustellenden Polymer ist, anwesend ist.